# EUROPEAN PATENT APPLICATION

(11) **EP 1 935 942 A1**
(43) Date of publication of application: **25.06.2008**
(21) Application number: 05783684.3
(22) Date of filing: 16.09.2005
(51) Int. Cl.: C08L 59/04, C08K 3/04, C08J 3/22

(54) **MASTER BATCH AND COMPOSITION CONTAINING THE SAME**

(71) Applicant: Asahi Kasei Chemicals Corporation, Tokyo 100-8440 (JP)
(72) Inventor: HORIO, Mitsuhiro, Tokyo 100-8440 (JP)
(74) Representative: Strehl, Peter
(86) International application number: PCT/JP2005/017139
(87) International publication number: WO 2007/032081

(57) **Abstract**

The comonomer quantity and thermal stability of polyoxymethylene resin copolymer are restricted and further the method of feeding polyoxymethylene resin and carbon in extrusion operation is delved deeper into to thereby enable production of a master batch excelling in thermal stability. Moreover, the composition loaded with the master batch retains mechanical properties (elastic modulus, impact resistance and vibration fatigue characteristics), chemical resistance and moldability, and has conducting capability.

## Description

### Technical Field

The present invention relates to a material which not only retains excellent mechanical properties (particularly, elastic modulus, impact resistance, and vibration fatigue characteristics), chemical resistance, moldability, and the like which are inherent in polyoxymethylene resins, but also has excellent conductivity. The composition of the present invention is suitable for parts in precision devices, household electrical appliances, OA appliances, automobiles, industrial materials, miscellaneous goods, and the like.

### Background Art

A polyoxymethylene resin is widely used for various working parts, OA appliances, and the like as an engineering plastic having well-balanced mechanical properties and excellent frictional wear performance. Further, the resin has been blended with various types of conductive carbon black and carbon fiber in order to impart conductivity to the same. However, the resultant materials are suffering from lower mechanical properties (particularly, impact resistance and vibration fatigue characteristics), and lower moldability resulting from poor thermal stability of the resin, and thus the range of use thereof has been limited.
In recent years, nanocarbons such as carbon nanotubes, carbon nanohoms and fulleren have been developed as a new material, and the application thereof to resin is under investigation. For example, JP-A-1-131251 and National Publication of International Patent Application No. 1993-503723 disclose a composite material which contains in a matrix a carbon nanotube having a diameter of 3.5 to 70 nm and a length 5 times or more of the diameter and a method for producing the same, but they do not disclose a polyoxymethylene resin as a resin component. National Publication of International Patent Application No. 1996-508534 discloses a polymer composition which contains 0.25 to 50% by weight of carbon fibrils and has an Izod impact strength with notch of more than about 2 feet-pounds/inch and a volume resistivity of less than about 1×10¹¹ ohms/cm, and also discloses a method for preparing master pellets which contain a carbon nanotube at a high concentration and adding them to the polymer to form the composition. However, in this disclosure, a polyoxymethylene resin is not described in the Examples of the Publication, though it is illustrated as a resin component. For this reason, any method for securing thermal stability which is important in extruding a polyoxymethylene resin is not shown at all, and therefore the method disclosed by the Publication cannot provide a performance with which it may be put to practical use as a polyoxymethylene resin. JP-A-2003-12939 discloses a carbon-containing resin composition comprising components of (A) a carbon nanotube having an average diameter of 1 to 45 nm and an average aspect ratio of 5 or more, (B) a resin, and (C) a filler, wherein the component (A) is uniformly dispersed in the component (B) substantially forming no aggregate without entanglement; the component (A) is within the range of 0.01 to 1.8% by weight based on 100% by weight of the resin composition; and the component (C) is within the range of 0.1 to 55% by weight. Further, it also describes that the components are added as a masterbatch. However, in this composition again, a polyoxymethylene resin is not described in the Examples of this patent, though it is illustrated as a component (B) and any consideration for securing thermal stability important in the extrusion of a polyoxymethylene resin is not shown at all. JP-A-2003-306607 discloses a resin composition obtained by dispersing carbon nanotube as a multilayer of 2 to 5 layers in an amount of 50% or more in a resin. In this disclosure, polyacetal is shown as a resin; an example using polyacetal is shown in the Examples of this patent; and an example of a masterbatch using polyamide is also shown. However, like the above Publication 2, this disclosure neither specifically describes a polyoxymethylene resin suitable for a masterbatch and masterbatch production nor the effect of a masterbatch. Further, JP-A-03-275764 and JP-A-04-045157 disclose a composition of a gas-phase method carbon fiber having a wide range of fiber diameter and a resin, showing an example using a polyoxymethylene homopolymer and a polyoxymethylene copolymer. However, any consideration for thermal stability is not made and there is no description about a masterbatch.

[Patent Document 1]
   JP-A-1-131251
[Patent Document 2]
   National Publication of International Patent Application No. 5-503723
[Patent Document 3]
   National Publication of International Patent Application No. 8-508534
[Patent Document 4]
   JP-A-2003-012939
[Patent Document 5]
   JP-A-2003-306607
[Patent Document 6]
   JP-A-04-045157
[Patent Document 7]
   JP-A-03-275764

### Disclosure of the Invention

### Problems to be Solved by the Invention

The present invention has been accomplished under the above circumstances and provides a polyoxymethylene resin composition which retains excellent mechanical properties (elastic modulus, impact resistance, and vibration fatigue characteristics), chemical resistance, and moldability that are inherent in polyoxymethylene resins and also has conducting capability as required, and a molded article of the same.

### Means for Solving the Problems

The present inventors have investigated for the purpose of providing a polyoxymethylene resin composition which retains excellent mechanical properties (elastic modulus, impact resistance, and vibration fatigue characteristics), chemical resistance, and moldability that are inherent in polyoxymethylene resins and also has conducting capability as required, and a molded article of the same. As a result, the present invention has been completed by preparing a masterbatch using a specific polyoxymethylene copolymer and a carbon nanotube and using the masterbatch and a specific polyoxymethylene resin to form a composition.

Specifically, the present invention relates to the following inventions 1 to 11.
1. A masterbatch prepared by melt-kneading (A-1) a polyoxymethylene copolymer having a comonomer content of 0.3 to 15 mol% (based on the oxymethylene units) and a residence time for silver streaking of 20 min or more when molded after being resided in a molding machine set to a cylinder temperature of 230°C and (B) 2 to 35 parts by weight of a carbon nanotube having a fiber diameter of 1 nm to 100 nm and an average aspect ratio of 5 or more.
2. The masterbatch according to the above 1, wherein the (A-1) used for the masterbatch is a polyoxymethylene copolymer having a comonomer content of 0.4 to 15 mol% (based on the oxymethylene units) and a residence time for silver streaking of 25 min or more when molded after being resided in a molding machine set to a cylinder temperature of 230°C.
3. The masterbatch according to the above 2, wherein the (A-1) used for the masterbatch has a comonomer content of 0.4 to 5 mol% (based on the oxymethylene units).
4. The masterbatch according to any of the above 1 to 3, wherein a quaternary ammonium compound is used in a stabilization step for the (A-1) used for the masterbatch.
5. The masterbatch according to any of the above 1 to 4, wherein the masterbatch is prepared using a twin-screw extruder having one or more side feed ports by a process comprising feeding the component (A-1) through a main feed port; and then feeding the component (B) and an optional portion of the component (A-1) through the one or more side feed ports provided downstream of the main feed port.
6. The masterbatch according to any of the above 1 to 5, wherein a dispersion improver (C) is further added in an amount of 0.1 to 20% by weight based on the (A-1) and melt-kneaded.
7. The masterbatch according to the above 6, wherein addition of the dispersion improver (C) is conducted using a twin-screw extruder having one or more side feed ports and according to a procedure of: (i) feeding the components (A-1) and (C) through the main feeder and then feeding the component (B) and an optional portion of the component (A-1) through the one or more side feeders; (ii) feeding the component (A-1) through the main feeder and then feeding the components (B), (C), and an optional portion of the component (A-1) through the one or more side feeders; or (iii) feeding the components (C), (B), and an optional portion of the component (A-1) through the main feeder and then feeding a remaining portion of the component (A-1) through the one or more side feeders.
8. A polyoxymethylene resin composition prepared by melt-kneading 100 weight parts of at least one selected from among a polyoxymethylene copolymer (A-2) having a comonomer content of 0.1 to 15 mol% (based on the oxymethylene units) and a terminal-stabilized polyoxymethylene homopolymer (A-3) with 0.5 to 100 parts by weight of the masterbatch according to any of the above 1 to 7.
9. The polyoxymethylene resin composition according to the above 8, which has a residence time for silver streaking of 7 min or more when molded after being resided in a molding machine set to a cylinder temperature of 230°C.
10. A molded article obtained by extrusion or injection molding of the polyoxymethylene resin composition according to the above 8 or 9.
11. A molded article obtained by further cutting the molded article according to the above 10.

### Advantages of the Invention

The present invention provides a polyoxymethylene resin composition which retains excellent mechanical properties (elastic modulus, impact resistance, and vibration fatigue characteristics), chemical resistance, and moldability that are inherent in polyoxymethylene resins and also has conducting capability as required, and a molded article of the same. The composition of the present invention is suitable for OA appliances, VTR appliances, music, image and information appliances, communication appliances, automobile interior and exterior parts, and industrial miscellaneous goods.

### Best Mode for Carrying Out the Invention

The polyoxymethylene copolymer (A-1) used for the masterbatch of the present invention is an oxymethylene copolymer which contains 0.3 to 15 mol% of oxyalkylene units having a carbon number of 2 to 8 based on the oxymethylene units, the copolymer being obtained by copolymerization of formaldehyde or its trimer (trioxane) or its tetramer (tetraoxane) with a cyclic comonomer such as ethylene oxide, propylene oxide, 1,3-dioxolane, a formal of glycol, or a formal of diglycol. (The comonomer of this polyoxymethylene copolymer refers to the above cyclic comonomer, and a hydrogenated liquid polybutadiene to be described below is not included.) Further, it is also preferred to use, as a polyoxymethylene copolymer, a polyoxymethylene block copolymer having a hydrogenated liquid polybutadiene residue with a number average molecular weight of 500 to 10,000 and hydroxyalkylated at both terminals. This polyoxymethylene block copolymer can be produced by a method shown in International Publication WO01/009213, and is specifically represented by the following formula:

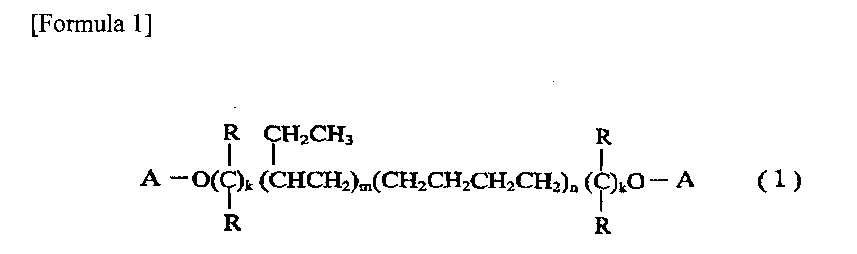

wherein, the part except A (hereafter referred to as a block B) is a hydrogenated liquid polybutadiene residue having a number average molecular weight of 500 to 10,000 and hydroxyalkylated at both terminals, wherein m= 2 to 98 mol%, n= 2 to 98 mol%, and m+n= 100 mol%; and m is present in a random or block form relative to n. However, the block B may be the one having an unsaturated bond with an iodine value of 20 g-I2/100 g or less. k is an integer selected from k= 2 to 6, and the two k's each may be the same or different. R is selected from hydrogen, an alkyl group, a substituted alkyl group, an aryl group, and a substituted aryl group, and R's may be the same as or different from each other. A is a polyoxymethylene copolymer residue represented by the following formula (2).

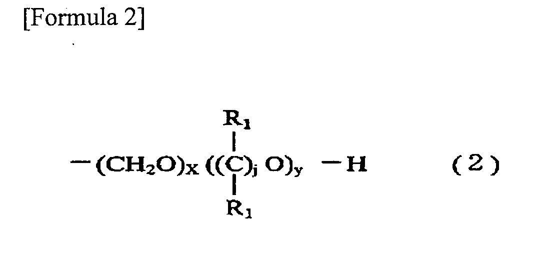

wherein R1 is selected from hydrogen, an alkyl group, a substituted alkyl group, an aryl group, and a substituted aryl group, and R's may be the same as or different from each other. j is an integer selected from 2 to 6. x= 95 to 99.9 mol%, y= 5 to 0.1 mol%, and x+y=100 mol%; and y is present at random relative to x. In the formula (1), the two A blocks have a number average molecular weight of 5,000 to 250,000.
The polyoxymethylene copolymer (A-1) used for the masterbatch of the present invention is a polyoxymethylene copolymer which contains 0.3 to 15 mol%, preferably 0.4 to 5 mol%, more preferably 0.4 to 3 mol%, further preferably 0.4 to 1.5 mol% of comonomer based on the oxymethylene units. The one having a higher content of comonomer is excellent in thermal stability but is poor in vibration fatigue characteristics. Therefore, the comonomer is preferably used in a lower content. In this case, the comonomer content of less than 0.3 mol% is not preferred since it is difficult to retain thermal stability of the masterbatch. The comonomer content exceeding 15 mol% is not preferred either since the masterbatch results in reduction in rigidity or vibration fatigue characteristics as well as in fuel oil permeability resistance. Further, in order to obtain thermal stability of the polyoxymethylene copolymer (A-1) by other means than a comonomer component, it is effective to use a quaternary ammonium compound in the step of stabilizing unstable terminals. In particular, in the case where comonomer content is low and rigidity is high, the stabilization effect by use of a quaternary ammonium salt is very large.
A polyoxymethylene copolymer (A-2), which is kneaded with the masterbatch of the present invention and is used for the polyoxymethylene resin composition, is essentially the same as the (A-1). However, it is possible to use the one having a lower comonomer concentration. Specifically, the comonomer content of the polyoxymethylene copolymer (A-2) is 0.1 to 15 mol%, preferably 0.3 to 5 mol%, more preferably 0.3 to 3 mol%, further preferably 0.3 to 1.5 mol%, based on the oxymethylene units. In addition, a polyoxymethylene homopolymer (A-3), which is kneaded with the masterbatch of the present invention and is used for the polyoxymethylene resin composition, is a homopolymer which is prepared by polymerizing formaldehyde or its trimer (trioxane) or its tetramer (tetraoxane) and blocking the both terminals of the resulting polymer by ether or ester groups. A comonomer content of the polyoxymethylene copolymer (A-2) of less than 0.1 mol% is not preferred since it is difficult to obtain satisfactory thermal stability by this comonomer content. A comonomer content exceeding 15 mol% is not preferred either since the masterbatch results in reduction in rigidity or vibration fatigue characteristics as well as in fuel oil permeability resistance. Further, the polyoxymethylene copolymer (A-2) and the polyoxymethylene homopolymer (A-3), which are kneaded with the masterbatch of the present invention to be used for the polyoxymethylene resin composition, are required to have excellent thermal stability. As a measure of the thermal stability, the composition obtained by kneading them with the masterbatch should have a residence time for silver streaking of 7 min or more when molded after being resided in a molding machine set to a cylinder temperature of 230°C, preferably 10 min or more, more preferably 15 min or more.

Further, the polyoxymethylene copolymers (A-1) and (A-2) and the polyoxymethylene homopolymer (A-3) used in the present invention have a melt flow rate (as measured according to ASTM-D1238-57T) in the range of 0.5 to 100 g/10 min, preferably 1.0 to 80 g/10 min, more preferably 3 to 60 g/10 min, further preferably 5 to 60 g/10 min. A melt flow rate of 0.5 g/10 min or more provides good molding processability, and a melt flow rate of 100 g/10 min or less provides good physical properties. Further, it is preferred that the (A-1) have a melt flow rate equivalent to that of the (A-2) or higher in terms of dispersibility.

In the masterbatch and the composition using the same of the present invention, stabilizers currently used in polyoxymethylene resins, for example, a heat stabilizer, a weathering (light) stabilizer, etc. can be used alone or in combination thereof. As a heat stabilizer, an antioxidant, a scavenger of formaldehyde or formic acid and a combined use thereof exhibit an effect. As an antioxidant, a hindered phenol antioxidant is preferred.

For example, hindered phenol antioxidants include n-octadecyl-3-(3',5'-di-t-butyl-4'-hydroxyphenyl)- propionate, n-octadecyl-3-(3'-methyl-5'-t-butyl-4'-hydroxyphenyl)-propionate, n-tetradecyl-3-(3',5'-di-t-butyl-4'-hydroxyphenyl)-propionate, 1,6-hexanediol-bis-(3-(3,5-di-t-butyl-4-hydroxyphenyl)-propionate), 1,4-butanediol-bis-(3-(3,5-di-t-butyl-4-hydroxyphenyl)-propionate), and triethyleneglycol-bis-(3-(3-t-butyl-5-methyl-4-hydroxyphenyl)-propionate).

In addition, hindered phenol antioxidants include tetrakis-(methylene-3-(3',5'-di-t-butyl-4'-hydroxyphenyl)propionatemethane, 3,9-bis(2-(3-(3-t-butyl-4-hydroxy-5-methylphenyl)propionyloxy)-1,1-dimethylethyl)2,4,8,10-tetraoxaspiro(5.5)undecane, N,N'-bis-3-(3',5'-di-t-butyl-4-hydroxyphenol)propionylhexamethylenediamine, N,N'-tetramethylenebis-3-(3'-methyl-5'-t-butyl-4-hydroxyphenol)propionyldiamine, N,N'-bis-(3-(3,5-di-t-butyl-4-hydroxyphenol)propionyl)hydrazine, N-salicyloyl-N'-salicylidenehydrazine, 3-(N-salicyloyl)amino-1,2,4-triazole, and N,N'-bis(2-(3-(3,5-di-butyl-4-hydroxyphenyl)propionyloxy)ethyl)oxyamide.

Among these hindered phenol antioxidants, triethyleneglycol-bis-(3-(3-t-butyl-5-methyl-4-hydroxyphenyl)-propionate) and tetrakis(methylene-3-(3',5'-di-t-butyl-4'-hydroxyphenyl)propionatemethane are preferred. These antioxidants are used in the range of 0.01 to 3 parts by weight, preferably 0.05 to 2 parts by weight, more preferably 0.1 to 1 part by weight, based on 100 parts by weight of the polyoxymethylene resin.

As a scavenger of formaldehyde or formic acid, there are mentioned a compound and a polymer containing a formaldehyde-reactive nitrogen (a) and a hydroxide, an inorganic acid salt, and a carboxylate of an alkali metal or an alkaline earth metal (b). The compound and polymer containing a formaldehyde-reactive nitrogen (a) include dicyandiamide, melamine, a co-condensation product of melamine and formaldehyde, a polyamide resin (for example, nylon 4-6, nylon 6, nylon 6-6, nylon 6-10, nylon 6-12, nylon 12, nylon 6/6-6, nylon 6/6-6/6-10, nylon 6/6-12, and the like), poly-β-alanine, and polyacrylamide. Among these, a co-condensation product of melamine and formaldehyde, a polyamide resin, poly-β-alanine, and polyacrylamide are preferred, and a polyamide resin and poly-β-alanine are more preferred. These compounds and polymers containing formaldehyde-reactive nitrogens are used in the range of 0.001 to 5 parts by weight, preferably 0.005 to 3 parts by weight, more preferably 0.01 to 2 parts by weight, based on 100 parts by weight of the polyoxymethylene resin.

The hydroxide, inorganic acid salt, and carboxylate of an alkali metal or an alkaline earth metal (b) include a hydroxide of sodium, potassium, magnesium, calcium, or barium, and a carbonate, a phosphate, a silicate, a borate, and a carboxylate of the above metals. Specifically, a calcium salt is most preferred, and it includes calcium hydroxide, calcium carbonate, calcium phosphate, calcium silicate, calcium borate, and a fatty acid calcium salt (such as calcium stearate and calcium myristate). These fatty acids may be substituted by a hydroxyl group. Among these, a fatty acid calcium salt (such as calcium stearate and calcium myristate) is preferred. The hydroxide, inorganic acid salt, and carboxylate of an alkali metal or an alkaline earth metal are preferably used in an amount in the range of 0.01 to 3 parts by weight, preferably 0.03 to 1 part by weight, more preferably 0.03 to 0.5 part by weight based on 100 parts by weight of the polyoxymethylene resin.

As the weathering (light) stabilizer, a benzotriazole-based substance (a), an oxalic acid anilide-based substance (b), and a hindered amine-based substance (c) are preferred. Examples of the benzotriazole-based substance (a) include 2-(2'-hydroxy-5'-methyl-phenyl)benzotriazole, 2-(2'-hydroxy-3,5-di-t-butylphenyl)benzotriazole, 2-(2'-hydroxy-3,5-di-isoarnyl-phenyl)benzotriazole, 2-[2'-hydroxy-3,5-bis-(α,α-dimethylbenzyl)phenyl]-2H-benzotriazole, and 2-(2'-hydroxy-4'-octoxyphenyl)benzotriazole.

There are preferred 2-[2'-hydroxy-3,5-bis-(α,α-dimethylbenzyl)phenyl]-2H-benzotriazole and 2-(2'-hydroxy-3,5-di-t-butyl-phenyl)benzotriazole.

Examples of the oxalic acid anilide-based substance (b) include 2-ethoxy-2'-ethyloxalic acid bisanilide, 2-ethoxy-5-t-butyl-2'-ethyloxalic acid bisanilide, and 2-ethoxy-3'-dodecyloxalic acid bisanilide. These substances may be used independently or in combination.

Examples of the hindered amine-based substance (c) include 4-acetoxy-2,2,6,6-tetramethylpiperidine, 4-stearoyloxy-2,2,6,6-tetramethylpiperidine, 4-acryloyloxy-2,2,6,6-tetramethylpiperidine, 4-(phenylacetoxy)-2,2,6,6-tetramethylpiperidine-4-benzoyloxy-2,2,6,6-tetramethylpiperidine, 4-methoxy-2,2,6,6-tetramethylpiperidine, 4-stearyloxy-2,2,6,6-tetramethylpiperidine, 4-cyclohexyloxy-2,2,6,6-tetramethylpiperidine, 4-benzyloxy-2,2,6,6-tetramethylpiperidine, 4-phenoxy-2,2,6,6-tetramethylpiperidine, 4-(ethylcarbamoyloxy)-2,2,6,6-tetramethylpiperidine, 4-(cyclohexylcarbamoyloxy)-2,2,6,6-tetramethylpiperidine, and 4-(phenylcarbamoyloxy)-2,2,6,6-tetramethylpiperidine.

In addition, examples of the hindered amine-based substance (c) include bis(2,2,6,6-tetramethyl-4-piperidine)-carbonate, bis(2,2,6,6-tetramethyl-4-piperidyl)-oxalate, bis(2,2,6,6-tetramethyl-4-piperidyl)-malonate, bis(2,2,6,6-tetramethyl-4-piperidyl)-sebacate, bis(2,2,6,6-tetramethyl-4-piperidyl)-adipate, bis(2,2,6,6-tetramethyl-4-piperidyl)-terephthalate, 1,2-bis(2,2,6,6-tetramethyl-4-piperidyloxy)-ethane, and α,α'-bis(2,2,6,6-tetramethyl-4-piperidyloxy)-p-xylene.

Furthermore, examples of the hindered amine-based substance (c) include bis(2,2,6,6-tetramethyl-4-piperidyl)tolylene-2,4-dicarbamate, bis(2,2,6,6-tetramethyl-4-piperidyl)-hexamethylene-1,6-dicarbamate, tris(2,2,6,6-tetramethyl-4-piperidyl)-benzene-1,3,5-tricaboxylate, and tris(2,2,6,6-tetramethyl-4-piperidyl)-benzene-1,3,4-tricaboxylate. Bis(2,2,6,6-tetramethyl-4-piperidyl)-sebacate is preferred. The above hindered amine-based substances may be used independently or in combination. The combination of the above benzotriazole-based substance, oxalic acid anilide-based substance, and hindered amine-based substance is most preferred. These weathering (light) stabilizers are preferably used in an amount in the range of 0.01 to 3 parts by weight, preferably 0.05 to 2 parts by weight, more preferably 0.1 to 2 parts by weight, based on 100 parts by weight of the polyoxymethylene resin.

A preferred combination of the heat stabilizer in the masterbatch and the polyoxymethylene resin composition of the present invention is the combination of "a hindered phenol (particularly, triethyleneglycol-bis-(3-(3-t-butyl-5-methyl-4-hydroxyphenyl)-propionate) and tetrakis-(methylene-3-(3',5'-di-t-butyl-4'-hydroxyphenyl)propionate methane)", "a polymer containing a formaldehyde-reactive nitrogen (a polyamide resin, poly-β-alanine, and polyacrylamide)", and optionally "a fatty acid salt of an alkaline earth metal (particularly, a fatty acid calcium salt) ". The addition amount of the heat stabilizer is preferably in the range of 0.1 to 0.5% by weight of "a hindered phenol", 0.01 to 1.0% by weight of "a polymer containing a formaldehyde-reactive nitrogen", and optionally 0.05 to 0.5% by weight of "a fatty acid salt (particularly, a fatty acid calcium salt) of an alkaline earth metal" based on the polyoxymethylene resin.

The carbon nanotube used for the component (B) of the present invention is a carbon nanotube having an average fiber diameter of 1 nm to 100 nm and an average aspect ratio of 5 or more. The fiber diameter is more preferably 3 to 80 nm , further preferably 5 to 70 nm. When the average diameter is less than 1 nm, it will be difficult to produce the fiber stably. When the average diameter exceeds 100 nm, there will be a case where it becomes impossible to obtain desired conductivity. Thus, these average diameter ranges are not desirable. Further, the aspect ratio is preferably 50 or more, more preferably 100 or more, further preferably 200 or more. A higher aspect ratio is preferred because it provides a higher conductivity-imparting effect. The carbon nanotube having an average diameter and an average aspect ratio in the above ranges can be used without particular limitation. For example, monolayer nanotubes and multilayer nanotubes can be preferably used, which are obtained, for example, by chemical vapor deposition, arc discharge, laser vaporization, or the like. These nanotubes, which can take a needle, coil, or tubular form, can be used if the average fiber diameter and the average aspect ratio are in the range as described above, and it is also possible to use two or more of them in combination. These carbon nanotubes can be produced by the methods disclosed by National Publication of International Patent Application No. 1987-500943, National Publication of International Patent Application No. 1990-503334, etc.

Further, the carbon nanotube can also be treated with a coupling agent in order to improve the adhesion to resin and dispersibility. Examples of the coupling agent include an isocyanate compound, an organic silane compound, an organic titanate compound, an organic boron compound, and an epoxy compound. The amount used is preferably 0.01 to 5 parts by weight based on the carbon nanotube.

When the component (A-1) and the component (B) form a masterbatch, the component (A-1) and the component (B) may be blended and then fed from the main feeder to be melt-kneaded. However, it is preferred to use an extruder having one or more side feed ports to feed the component (A-1) from the main feed ports and feed the component (B) and an optional portion of the component (A-1) from the one or more side feed ports located downstream of the extruder. This not only provides excellent thermal stability to the masterbatch itself but also provides thermal stability, mechanical properties, and conductivity to the composition using the masterbatch. Further, those obtained by dividing the component (B) and feeding them through a plurality of side feeders exhibit better performance. The localization of a mixture of the polyoxymethylene resin and a high-concentration carbon nanotube is supposed to affect the performance.

The dispersion improver used as the component (C) of the present invention means a dispersant for dispersing a carbon nanotube in a resin and is not particularly limited if it can disperse a carbon nanotube to particles of 10 µm or less when kneaded with a polyoxymethylene copolymer or a polyoxymethylene block copolymer. Examples of the dispersion improver include a polymer, an oligomer, and a modified product thereof, such as a polyolefin resin, a resin containing a polyether group, a phenol resin, an epoxy resin, and a petroleum resin, an alcohol, a fatty acid, an ester of an alcohol and a fatty acid, an ester of an alcohol and a dicarboxylic acid, and a polyoxyalkylene glycol.

Examples of the polyolefin polymer and a modified product thereof include homopolymers or copolymers of olefin compounds such as ethylene, propylene, butene-1, pentene-1, 4-methylpentene-1, hexene-1, heptene-1, octene-1, nonene-1, decene-1, undecene-1, dodecen-1, butadiene, isoprene, phenylpropadiene, cyclopentadiene, norbornadiene, cyclohexadiene, and cyclooctadiene. Specifically, examples include polyethylene (high density polyethylene, medium density polyethylene, low density polyethylene, linear low density polyethylene, very low density polyethylene), polypropylene, an ethylene-propylene copolymer, an ethylene-butene copolymer, an ethylene-octene copolymer, a propylene-butene copolymer, polybutene, a hydrogenated product of polybutadiene, an ethylene-acrylic ester copolymer, an ethylene-methacrylic acid ester copolymer, an ethylene-acrylic acid copolymer, and an ethylene-vinyl acetate copolymer. Examples further include acid-modified olefin resins obtained by modifying the above polyolefin polymers by an α,β-unsaturated carboxylic acid (acrylic acid, methacrylic acid, maleic acid, fumaric acid, itaconic acid, citraconic acid, nadic acid) and/or an acid anhydride thereof (optionally using a peroxide in combination). These polyolefin polymers are not particularly limited, but preferably have a melt flow rate (ASTM-D1238-57T) in the range of 0.5 to 150 g/10 min, more preferably 3 to 120 g/10 min, most preferably 5 to 100 g/10 min. Examples of the oligomer preferably include the above olefin compounds having a number average molecular weight in the range of 500 to 15,000, more preferably 1,000 to 10,000. When these olefin compounds have a carbon-carbon unsaturated bond, it is preferred to use an olefin compound from which the carbon-carbon unsaturated bond is eliminated as much as possible using a conventional hydrogenation method from a viewpoint of improvement in thermal stability.

Examples of the polymers and oligomers having a polyether component include polymers and oligomers such as polyalkylene oxides (a polyethylene oxide, a polypropylene oxide, a polybutylene oxide, and a polytetramethylene oxide, and copolymers and graft polymers thereof), polyester, polyurethane, polyether ester, polyetheresteramide, polyetheramide, and graft polymers obtained by grafting polyether to other resins. The polymer preferably has a weight average molecular weight in the range of 10,000 to 500,000, more preferably in the range of 20,000 to 400,000. The oligomer preferably has a number average molecular weight in the range of 500 to 10,000.

Examples of phenol resins, which are obtained by reacting phenol with formaldehyde, include a novolak type phenol resin obtained by reacting phenol with formaldehyde using an acid catalyst and a resorcinol type phenol resin obtained by reacting phenol with formaldehyde using an alkaline catalyst. Both types can be used in the present invention, but a novolak type phenol resin is particularly preferred. The phenol resin preferably has, but is not limited to, a weight average molecular weight of 100 to 10,000. Further, the phenol resin is preferably modified with paraxylene or alkylbenzene. Furthermore, the phenol resin generally contains several percent of unreacted phenol, but the content of the unreacted phenol is preferably 5% or less, more preferably 2% or less in the present invention in terms of a smell. Since it is difficult to show the structure of phenol resins, specific examples thereof are mentioned, which include Sumilite resin PR-5-731, PR-53647, PR-54443, PR-54537, and PR-51992 manufactured by Sumitomo Durez, Co., Ltd. and a phenol resin CP-504 manufactured by Asahi Organic Chemicals Industry, Co., Ltd. (all are trade names).

The alcohol includes a monohydric alcohol and a polyhydric alcohol. Examples of monohydric alcohols include saturated or unsaturated alcohols such as octyl alcohol, nonyl alcohol, decyl alcohol, undecyl alcohol, lauryl alcohol, tridecyl alcohol, myristyl alcohol, pentadecyl alcohol, cetyl alcohol, heptadecyl alcohol, stearyl alcohol, oleyl alcohol, nonadecyl alcohol, eicosyl alcohol, ceryl alcohol, behenyl alcohol, melissyl alcohol, hexyldecyl alcohol, octyldodecyl alcohol, decylmyristyl alcohol, decylstearyl alcohol, and Unilin alcohol.

Examples of polyhydric alcohols include ethylene glycol, diethylene glycol, triethylene glycol, propylene glycol, dipropylene glycol, butanediol, pentanediol, hexanediol, glycerol, diglycerol, triglycerol, threitol, erythritol, pentaerythritol, arabitol, ribitol, xylitol, sorbite, sorbitan, sorbitol, and mannitol.

Examples of the fatty acid include caproic acid, enanthic acid, caprylic acid, pelargonic acid, capric acid, undecylic acid, lauric acid, tridecyl acid, myristic acid, pentadecyl acid, palmitic acid, pentadecyl acid, stearic acid, nanodecanoic acid, arachin acid, behenic acid, lignoceric acid, cerotic acid, heptacosanoic acid, montanic acid, melissic acid, lacceric acid, undecylenic acid, oleic acid, elaidic acid, setoleic acid, erucic acid, brassidic acid, sorbic acid, linolic acid, linolenic acid, arachidonic acid, propiolic acid, and stearolic acid, and naturally occurring fatty acids containing the above components, and mixtures thereof.

These fatty acids may be substituted by a hydroxy group or a carboxyl group. Further, these fatty acids may be a synthetic fatty acid modified by carboxylation at a terminal of Unilin alcohol, which is a synthetic fatty alcohol.

The ester of an alcohol and a fatty acid includes an ester of an alcohol and a fatty acid which are shown below. The alcohol includes a monohydric alcohol and a polyhydric alcohol. Examples of the monohydric alcohol include saturated and unsaturated alcohols such as methyl alcohol, ethyl alcohol, propyl alcohol, butyl alcohol, amyl alcohol, hexyl alcohol, heptyl alcohol, octyl alcohol, nonyl alcohol, decyl alcohol, undecyl alcohol, lauryl alcohol, tridecyl alcohol, myristyl alcohol, pentadecyl alcohol, cetyl alcohol, heptadecyl alcohol, stearyl alcohol, oleyl alcohol, nonadecyl alcohol, eicosyl alcohol, ceryl alcohol, behenyl alcohol, melissyl alcohol, hexyldecyl alcohol, octyldodecyl alcohol, decylmyristyl alcohol, decylstearyl alcohol, and Unilin alcohol.

Examples of the polyhydric alcohol include a polyhydric alcohol containing 2 to 6 carbon atoms, such as ethylene glycol, diethylene glycol, triethylene glycol, propylene glycol, dipropylene glycol, butanediol, pentanediol, hexanediol, glycerol, diglycerol, triglycerol, pentaerythritol, arabitol, ribitol, xylitol, sorbite, sorbitan, sorbitol, and mannitol.

Examples of the fatty acid include caproic acid, enanthic acid, caprylic acid, pelargonic acid, capric acid, undecylic acid, lauric acid, tridecyl acid, myristic acid, pentadecyl acid, palmitic acid, pentadecyl acid, stearic acid, nanodecanoic acid, arachin acid, behenic acid, lignoceric acid, cerotic acid, heptacosanoic acid, montanic acid, melissic acid, lacceric acid, undecylenic acid, oleic acid, elaidic acid, setoleic acid, erucic acid, brassidic acid, sorbic acid, linolic acid, linolenic acid, arachidonic acid, propiolic acid, and stearolic acid, and naturally occurring fatty acids containing the above components, and mixtures thereof.

These fatty acids may be substituted by a hydroxy group. Further, these fatty acids may be a synthetic fatty acid obtained by carboxyl modification of a terminal of Unilin alcohol, which is a synthetic fatty alcohol. Among these alcohols, fatty acids, and esters of an alcohol and a fatty acid, esters of a fatty acid having 12 or more carbon atoms and an alcohol are preferred; esters of a fatty acid having 12 or more carbon atoms and an alcohol having 10 or more carbon atoms are more preferred; and esters of a fatty acid having 12 to 30 carbon atoms and an alcohol having 10 to 30 carbon atoms are still more preferred.

The ester of an alcohol and a dicarboxylic acid includes a monoester, a diester, and a mixture thereof of a saturated or unsaturated primary alcohol such as octyl alcohol, nonyl alcohol, decyl alcohol, undecyl alcohol, lauryl alcohol, tridecyl alcohol, myristyl alcohol, pentadecyl alcohol, cetyl alcohol, heptadecyl alcohol, stearyl alcohol, oleyl alcohol, nonadecyl alcohol, eicosyl alcohol, ceryl alcohol, behenyl alcohol, melissyl alcohol, hexyldecyl alcohol, octyldodecyl alcohol, decylmyristyl alcohol, decylstearyl alcohol, and Unilin alcohol and a dicarboxylic acid such as oxalic acid, malonic acid, succinic acid, glutaric acid, adipic acid, pimelic acid, suberic acid, azelaic acid, sebacic acid, undecanedioic acid, brassylic acid, maleic acid, fumaric acid, and glutaconic acid. Among these esters of an alcohol and a dicarboxylic acid, an ester of an alcohol having 10 or more carbon atoms and a dicarboxylic acid is preferred.

The polyoxyalkylene glycol compound includes 3 types of compounds. The first group includes a condensation polymer using an alkylene glycol as a monomer. Examples of the first group polymers include polyethylene glycol, polypropylene glycol, and a block polymer of ethylene glycol and propylene glycol. The number of moles thereof in the polymer is preferably in the range of 5 to 1,000, more preferably in the range of 10 to 500.

The second group includes an ether compound of the first group and a fatty alcohol. Examples of the second group include polyethylene glycol oleyl ether (the number of moles of ethylene oxide in the polymer: 5 to 50), polyethylene glycol cetyl ether (the number of moles of ethylene oxide in the polymer: 5 to 50), polyethylene glycol stearyl ether (the number of moles of ethylene oxide in the polymer: 5 to 30), polyethylene glycol lauryl ether (the number of moles of ethylene oxide in the polymer: 5 to 30), polyethylene glycol tridecyl ether (the number of moles of ethylene oxide in the polymer: 5 to 30), polyethylene glycol nonylphenyl ether (the number of moles of ethylene oxide in the polymer: 2 to 100), and polyethylene glycol octylphenyl ether (the number of moles of ethylene oxide in the polymer: 4 to 50).

The third group compound includes an ester compound of the first group and a higher fatty acid. Examples of the third group compound include polyethylene glycol monolaurate (the number of moles of ethylene oxide in the polymer: 2 to 30), polyethylene glycol monostearate (the number of moles of ethylene oxide in the polymer: 2 to 50), and polyethylene glycol monooleate (the number of moles of ethylene oxide in the polymer: 2 to 50).

Such a dispersion improver (C) is used by melt-kneading it with a polyoxymethylene copolymer (A-1) and a carbon nanotube (B). The blending ratio in the case of using the dispersion improver is in the range of 0.1 to 20% by weight based on the polyoxymethylene copolymer (A-1), preferably 0.2 to 15% by weight, more preferably in the range of 0.3 to 10% by weight. A blending ratio of 0.1 % by weight or more provides a good dispersion effect, and a blending ratio of 20% by weight provides good rigidity and fuel oil permeability resistance.

The method for adding the dispersion improver (C) includes, by using a twin-screw extruder having a main feeder and one or more side feeders, (i) a method of feeding the components (A-1) and (C) through the main feeder and then feeding the component (B) through the one or more side feeders, (ii) a method of feeding the component (A-1) through the main feeder and then feeding the components (B), (C), and an optional portion of the component (A-1) through the one or more side feeders, and (iii) a method of feeding the components (C), (B), and an optional portion of the component (A-1) through the main feeder and then feeding the remaining portion of component (A-1) through the one or more side feeders.

Further, the masterbatch and composition of the present invention can be mixed with various additives conventionally used in polyoxymethylene resins (for example, a lubricant, an impact modifier, a resin other than described in this application, a crystal nucleating agent, a release agent, a filler (an organic filler, an inorganic filler)), a dye, a pigment, etc., in the range that does not impair the object of the present invention depending on request.

It is preferred to use a twin screw extruder for the production of the masterbatch of the present invention in terms of operability. It is possible to use a kneader, a roll mill, a single screw extruder, a twin screw extruder, and a multi-screw extruder for kneading the masterbatch and polyoxymethylene. A single screw extruder and a twin screw extruder are preferred in terms of operability. The working temperature at this time is preferably 180 to 240°C. In order to maintain the quality and work environment, inert gas flushing or deaeration using a single stage venting or multi-stage venting is preferred.

The molded articles of the present invention are produced by molding methods such as injection molding, hot runner injection molding, outsert molding, insert molding, gas-assist hollow injection molding, injection molding with a mold heated by high frequency induction, compression molding, blown film extrusion, blow molding, and extrusion and then optional cutting. The molded articles of the present invention are used for parts requiring conductivity and antistatic performance in the applications as described below.

These molded articles include: mechanism elements such as gears, cams, sliders, levers, arms, clutches, felt clutches, idler gears, pulleys, rollers, rolls, key stems, key tops, shutters, reels, shafts, joints, axles, bearings, and guides; outsert molding resin parts; insert molding resin parts; parts for office automation appliances such as chassis, trays, side plates, printers and copiers; parts for cameras or video appliances such as VTR (video tape recorder), video movies, digital video cameras, cameras and digital cameras; parts for music, image and information appliances such as cassette players, DAT, LD (laser disk), MD (mini disk), CD (compact disk) [including CD-ROM (read only memory), CD-R (recordable) and CD-RW (rewritable)], DVD (digital versatile disk) [including DVD-ROM, DVD-R, DVD-RW, DVD-RAM (random access memory) and DVD-Audio], other optical disk drives, MFD, MO, navigation systems and mobile personal computers; communication appliances such as portable telephones and facsimiles; electrical appliance parts; and electronic appliance parts.

Further, these molded articles can be used as automobile parts including: fuel-related components such as gasoline tanks, fuel pump modules, valves, and gasoline tank flanges; door-related parts such as door locks, door handles, window regulators, and speaker grills; sheet belt-related parts such as sheet belt slip rings, press buttons, through anchors, and tangs; combination switch parts; switches; and clips.

Furthermore these molded article can be used as parts including: mechanical pencil pen points and mechanism elements for propelling or retracting mechanical pencil lead; wash stands, drain ports, and drain plug opening/closing mechanism elements; door lock mechanism and commodity product delivery mechanism elements for vending machines; cord stoppers, adjusters, and buttons for clothes; sprinkler nozzles and connection joints for sprinkler hoses; architectural parts for step rails and flooring material supports; and industrial parts such as disposable cameras, toys, fasteners, chains, conveyors, buckles, sporting goods, vending machines, furniture, musical instruments and housing equipment.

### Examples

Hereinafter, the present invention will be described specifically with reference to Examples. First of all, the components to be used in Examples and Comparative Examples and evaluation methods will be explained below.

### Components to be used

### A. Polyoxymethylene resins

a-1: A twin-screw paddle type continuous polymerizer with a jacket capable of passing a heating medium was adjusted to a temperature of 80°C. Then, trioxane containing 4 ppm of water and formic acid in total and 1,3-dioxolane as a cyclic formal were fed to the polymerizer simultaneously at 40 mol/hr and 0.65 mol/hr, respectively. Further, boron trifluoride di-n-butyl etherate dissolved in cyclohexane as a polymerization catalyst and methylal [(CH₃O)₂CH₂] as a chain transfer agent were continuously fed thereto so as to provide 1.5×10⁻⁵ mol of boron trifluoride di-n-butyl etherate and 2×10⁻³ mol of methylal, respectively, per 1 mol of trioxane for polymerization. Polymers discharged from the polymerizer were put into an aqueous 1% triethylamine solution to completely deactivate the polymerization catalyst, and then the polymers were recovered by filtration and washed. Then, triethyl(2-hydroxyethyl)ammonium formate as a quaternary ammonium compound was added to 1 part by weight of the crude polyoxymethylene copolymer resulting from the filtration and washing so as to provide 20 wt. ppm of triethyl(2-hydroxyethyl)ammonium formate in terms of nitrogen, followed by uniform mixing and drying at 120°C.

Then, a twin screw extruder (having a preset temperature of 200°C) equipped with a side feed port and a liquid addition line was used to prepare the polyoxymethylene resin. The dried crude polyoxymethylene copolymer in an amount of 100 parts by weight was fed from the main feed port. To the molten polyoxymethylene copolymer, was fed 5 parts by weight of an aqueous 2% by weight triethylamine solution for decomposing unstable terminals of the copolymer. Then, the resulting copolymer was deaerated at -0.07 MPa through a vent provided in the downstream region. Then, from a side feed port provided further downstream of the vent, were added 0.3 part by weight of triethyleneglycol bis[3-(3-t-butyl-5-methyl-4-hydroxyphenyl)propionate] as an antioxidant, 0.05 part by weight of calcium stearate, and 0.025 part by weight of polyamide 66, followed by melt-kneading these components. The melt-kneaded product was extruded through extruder dies as strands and pelletized. The resulting polyoxymethylene copolymer had a comonomer content of 0.51 mol% (based on the oxymethylene units), a residence time for silver streaking of 60 min when molded after being resided in a molding machine set to a cylinder temperature of 230°C, a flexural modulus of elasticity of 2,750 MPa, and a melt flow rate of 9.0 g/10 min.

a-2: This polyoxymethylene copolymer was prepared in the same manner as a-1 except that the feed rate of 1,3-dioxolane for a-1 was changed to 0.42 mol/hr. The resulting polyoxymethylene copolymer had a comonomer content of 0.31 mol% (based on the oxymethylene units), a residence time for silver streaking of 30 min when molded after being resided in a molding machine set to a cylinder temperature of 230°C, a flexural modulus of elasticity of 2,800 MPa, and a melt flow rate of 9.1 g/10 min.

a-3: This polyoxymethylene copolymer was prepared in the same manner as a-1 except that the feed rate of 1,3-dioxolane for a-1 was changed to 0.14 mol/hr. The resulting polyoxymethylene copolymer had a comonomer content of 0.10 mol% (based on the oxymethylene units), a residence time for silver streaking of 10 min when molded after being resided in a molding machine set to a cylinder temperature of 230°C, a flexural modulus of elasticity of 2,900 MPa, and a melt flow rate of 9.8 g/10 min.

a-4: This polyoxymethylene copolymer was prepared in the same manner as a-1 except that the feed rate of 1,3-dioxolane for a-1 was changed to 2.0 mol/hr. The resulting polyoxymethylene copolymer had a comonomer content of 1.5 mol% (based on the oxymethylene units), a residence time for silver streaking of 100 min when molded after being resided in a molding machine set to a cylinder temperature of 230°C, a flexural modulus of elasticity of 2,600 MPa, and a melt flow rate of 9.1 g/10 min.

a-5: This polyoxymethylene copolymer was prepared in the same manner as a-1 except that the feed rate of 1,3-dioxolane for a-1 was changed to 5.0 mol/hr. The resulting polyoxymethylene copolymer had a comonomer content of 4.0 mol% (based on the oxymethylene units), a residence time for silver streaking of 150 min when molded after being resided in a molding machine set to a cylinder temperature of 230°C, a flexural modulus of elasticity of 1,600 MPa, and a melt flow rate of 9.0 g/10 min.

a-6: A twin-screw paddle type continuous polymerizer with a jacket capable of passing a heating medium was adjusted to a temperature of 80°C. Then, trioxane containing 4 ppm of water and formic acid in total and 1,3-dioxolane as a cyclic formal were fed to the polymerizer simultaneously at 40 mol/hr and 2 mol/hr, respectively. Further, boron trifluoride di-n-butyl etherate dissolved in cyclohexane as a polymerization catalyst and a hydrogenated polybutadiene hydroxylated at both terminals (Mn=2,330) represented by the following formula (1) as a chain transfer agent were continuously fed thereto so as to provide 5×10⁻⁵ mol and 1×10⁻³ mol, respectively, per 1 mol of trioxane for polymerization.

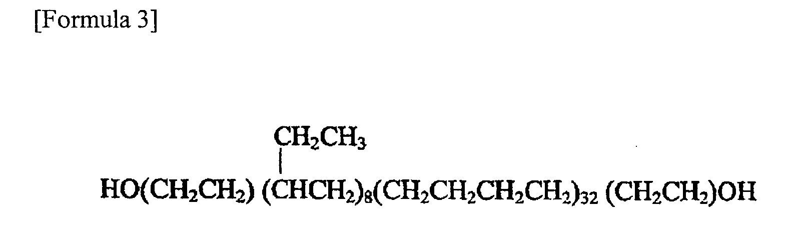

Polymers discharged from the polymerizer were put into an aqueous 1% triethylamine solution to completely deactivate the polymerization catalyst, and then the polymers were recovered by filtration and washed. Then, triethyl(2-hydroxyethyl)ammonium formate as a quaternary ammonium compound was added to 1 part by weight of the crude polyoxymethylene copolymer resulting from the filtration and washing so as to provide 20 wt. ppm of triethyl(2-hydroxyethyl)ammonium formate in terms of nitrogen, followed by uniform mixing and drying at 120°C. Then, a twin screw extruder (having a preset temperature of 200°C) equipped with a side feed port and a liquid addition line was used to prepare the polyoxymethylene resin. The dried crude polyoxymethylene copolymer in an amount of 100 parts by weight was fed from the main feed port. To the molten polyoxymethylene copolymer, was fed 5 parts by weight of an aqueous 2% by weight triethylamine solution for decomposing unstable terminals of the copolymer. Then, the resulting copolymer was deaerated at -0.07 MPa through a vent provided in the downstream region. Then, from a side feed port provided further downstream of the vent, were added 0.3 part by weight of triethyleneglycol-bis[3-(3-t-butyl-5-methyl-4-hydroxyphenyl)propionate] as an antioxidant, 0.05 part by weight of calcium stearate, and 0.025 part by weight of polyamide 66, followed by melt-kneading these components. The melt-kneaded product was extruded through extruder dies as strands and pelletized. The resulting polyoxymethylene copolymer had a comonomer content of 1.5 mol% (based on the oxymethylene units), a residence time for silver streaking of 100 min when molded after being resided in a molding machine set to a cylinder temperature of 230°C, a flexural modulus of elasticity of 2,550 MPa, and a melt flow rate of 9.0 g/10 min.

a-7: This polyoxymethylene copolymer was prepared in the same manner as a-1 except that the polymer for a-1 after polymerization was recovered by filtration and washed, and then dried without adding a quaternary ammonium compound. The resulting polyoxymethylene copolymer had a comonomer content of 0.51 mol% (based on the oxymethylene units), a residence time for silver streaking of 15 min when molded after being resided in a molding machine set to a cylinder temperature of 230°C, a flexural modulus of elasticity of 2,750 MPa, and a melt flow rate of 9.8 g/10 min.

a-8: This polyoxymethylene copolymer was prepared in the same manner as a-2 except that the polymer for a-2 after polymerization was recovered by filtration and washed, and then dried without adding a quaternary ammonium compound. The resulting polyoxymethylene copolymer had a comonomer content of 0.30 mol% (based on the oxymethylene units), a residence time for silver streaking of 8 min when molded after being resided in a molding machine set to a cylinder temperature of 230°C, a flexural modulus of elasticity of 2,800 MPa, and a melt flow rate of 9.8 g/10 min.

a-9: This polyoxymethylene copolymer was prepared in the same manner as a-2 except that the polymer for a-4 after polymerization was recovered by filtration and washed, and then dried without adding a quaternary ammonium compound. The resulting polyoxymethylene copolymer had a comonomer content of 1.5 mol% (based on the oxymethylene units), a residence time for silver streaking of 40 min when molded after being resided in a molding machine set to a cylinder temperature of 230°C, a flexural modulus of elasticity of 2,600 MPa, and a melt flow rate of 9.6 g/10 min.
a-10: Tenac 4010 (manufactured by Asahi Kasei Chemicals Corporation) having a residence time for silver streaking of 15 min when molded after being resided in a molding machine set to a cylinder temperature of 230°C, a flexural modulus of elasticity of ,3,000 MPa, and a melt flow rate of 8.56 g/10 min.

### (B) Carbon nanotube

(b-1) A carbon nanotube having an average fiber diameter of 10 nm and an average length of 10 µm (aspect ratio: 1,000).
(b-2) A carbon nanotube having an average fiber diameter of 10 nm and an average length of 3 µm (aspect ratio: 300).
(b-3) A carbon nanotube having an average fiber diameter of 10 nm and an average length of 2 µm (aspect ratio: 200).
(b-4) A carbon nanotube having an average fiber diameter of 10 nm and an average length of 1.5 µm (aspect ratio: 150).
(b-5) Ketchen black EC600JD (manufactured by Lion-Akzo Co., Ltd.)

### (C) Dispersion improver

(c-1) Polyether-containing polymer: Melpol F-220 (manufactured by Sanyo Chemical Industries, Ltd.)
(c-2) Polyethylene oxide (molecular weight: 50,000)
(c-3) Ethylene-butene copolymer: Toughmer A70090 (manufactured by Mitsui Chemicals, Inc.)
(c-4) Polyethylene glycol (molecular weight: 60,000)

### Evaluation methods

### (1) Thermal stability of masterbatch

Pellets of masterbatches obtained in the following Examples and Comparative Examples were dried at 80°C for 3 hours, preheated for 10 min, and then molded into 3 mm-thick flat plates using a compression molding machine set at 200°C under a pressure of 10 MPa for 10 min. The resulting molded articles with silver streaks on the surface thereof were evaluated.

⓪: No silver-streak generation at all.
○: Silver streaks generated on less than a quarter of the area of the molded-article surface.
Δ: Silver streaks generated on less than a half of the area of the molded-article surface.
×: Silver streaks generated on a half to the whole of the area of the molded-article surface.

### (2) Physical Property Evaluation

Pellets obtained in the following Examples and Comparative Examples were dried at 80°C for 3 hours, and then molded into test pieces for physical property evaluation by a 5-ounce molding machine (IS-100E, manufactured by Toshiba Machine Co., Ltd.) set to a cylinder temperature of 200°C under such conditions as mold temperature: 70°C and cooling time: 30 seconds. The test pieces were subjected to the following tests:
1) Flexural modulus of elasticity: measured according to ASTM D790.
2) Izod impact strength: measured according to ASTM D256.
3) Repeated impact strength
   The ASTM test pieces (without notch) used for measuring Izod impact strength were subjected to repeated impact testing using a repeated impact tester manufactured by Toyo Seiki Seisaku-sho, Ltd. under such conditions as load: 1,000 g, falling height: 80 mm, falling speed: 30 times/min for measuring the number of times until the test pieces are broken.
4) Volume resistivity
   The volume resistivity was measured using a volume resistivity measurement apparatus (R8340A+R12704B manufactured by Advantest Corporation) in accordance with ASTM D991.
5) Thermal stability of composition
   Source pellets and compositions obtained by blending masterbatches with polyoxymethylene resins used in the following Examples and Comparative Examples were evaluated for thermal stability. Pellets were dried at 80°C for 3 hours and then molded using a 5-ounce molding machine (IS-100GN, manufactured by Toshiba Machine Co., Ltd.) set to a cylinder temperature of 230°C after being retained therein under the condition of a mold temperature of 70°C, to measure the time before silver streaks are generated on the surface of the molded articles.

### Example 1

The polyoxymethylene resin (a-1) as the component (A-1) was fed at a feed rate of 4,750 g/hr through the main feed port of a twin-screw extruder having a diameter of 25 mm (L/D=42) set to 200°C, and the carbon nanotube component (b-1) was fed at a feed rate of 250 g/hr through the side feed port (1) provided downstream of the extruder. These components were melt-kneaded in the extruder at a screw revolution rate of 200 rpm. It was verified that the component (a-1) was in a molten state at the side feed port (1). Further, the melt-kneaded mixture was subjected to vacuum deaeration through the vent port provided downstream of the side feed port (1). The extruded resin was pelletized by a strand cutter. The resulting pellets were used for evaluation. The results are shown in Table 1.

### Examples 2 to 6

These Examples were performed in the same manner as in Example 1 except that the components shown in Table 1 were used instead of the component (a-1) in Example 1. The results are shown in Table 1.

### Examples 7 and 8

These Examples were performed in the same manner as in Examples 1 and 2 except that the component (b-1) in Examples 1 and 2 were fed through the main feed port. The results are shown in Table 1.

### Comparative Examples 1 to 3

These Comparative Examples were performed in the same manner as in Example 1 except that the components shown in Table 1 were used instead of the component (a-1) in Example 1. The results are shown in Table 1.

### Comparative Example 4

This Comparative Example was performed in the same manner as in Example 1 except that the component (b-1) in Comparative Example 1 was fed through the main feed port. The results are shown in Table 1.

### Example 9

This Example was performed in the same manner as in Example 1 except that the feed rate of the components (a-1) and (b-1) were changed to 4,500 g/hr and 500 g/hr, respectively. The results are shown in Table 2.

### Example 10

This Example was performed in the same manner as in Example 1 except that the feed rate of the components (a-1) and (b-1) were changed to 4,000 g/hr and 1,000 g/hr, respectively. The results are shown in Table 2.

### Example 11

This Example was performed in the same manner as in Example 1 except that the feed rate of the components (a-1) and (b-1) were changed to 3,750 g/hr and 1,250 g/hr, respectively. The results are shown in Table 2.

### Comparative Example 5

This Comparative Example was performed in the same manner as in Example 1 except that the feed rate of the components (a-1) and (b-1) were changed to 3,500 g/hr and 1,500 g/hr, respectively. The results are shown in Table 2.

### Examples 12 to 14

These Examples were performed in the same manner as in Example 1 except that the components shown in Table 1 were used instead of the component (b-1) in Example 1. The results are shown in Table 2.

### Example 15

This Example was performed in the same manner as in Example 1 except that the component (a-1) in Example 1 was divided into two halves, and one half was fed through the main feed port and the other half was fed through the side feed port (1). The results are shown in Table 3.

### Example 16

This Example was performed in the same manner as in Example 15 except that the divided feeding in Example 15 was further advanced by providing a side feed port (2), wherein one half of the component (b-1) and a quarter of the component (a-1) were fed through the side feed port (1); and the other half of the component (b-1) and another quarter of the component (a-1) were fed through the side feed port (2). In addition, the melt-kneaded mixture was subjected to vacuum deaeration through the vent port provided downstream of the side feed port (2). The results are shown in Table 3.

### Examples 17 to 20

These Examples were performed in the same manner as in Example 1 except that the dispersion improver components (c-1 to 4) shown in Table 2 were fed through the main feed port at a feed rate of 150 g/hr in addition to the component (a-1) in Example 1. The results are shown in Table 3.

### Examples 21 and 22

These Examples were performed in the same manner as in Examples 17 and 19, respectively, except that the component (a-1) in Examples 17 and 19 was changed to the component (a-6). The results are shown in Table 3.

### Example 23

This Example was performed in the same manner as in Example 20 except that the component (c-4) in Example 20 was added through the side feed port (1). The results are shown in Table 3.

### Example 24

This Example was performed in the same manner as in Example 18 except that the component (a-1) in Example 18 was changed to the component (a-2). The results are shown in Table 3.

### Example 25

The carbon nanotube component (b-1) and the dispersion improver component (c-2) were fed at a feed rate of 250 g/hr and 150 g/hr, respectively, through the main feed port of a twin-screw extruder having a diameter of 25 mm (L/D=42) set to 200°C, and the polyoxymethylene resin component (a-1) was fed at a feed rate of 1,875 g/hr (one half) through the side feed port (1) provided downstream of the extruder. The remaining polyoxymethylene resin (a-1) was fed through the side feed port (2) provided further downstream of the extruder at a feed rate of 1,875 g/hr (the other half). The component (a-1) fed through the side feed port (1) was seen to be in a molten state at the side feed port (2). Further, the mixture was subjected to vacuum-deaeration through the vent port provided downstream of the side feed port (2). The extruded resin was pelletized by a strand cutter. The resulting pellets were used for evaluation. The results are shown in Table 3.

### Comparative Examples 6 and 7

These Comparative Examples were performed in the same manner as in Examples 1 and 7 except that the component (b-5) was used instead of the component (b-1) in Examples 1 and 7. The results are shown in Table 3.

### Comparative Example 8

The polyoxymethylene resin (a-1) and the carbon nanotube component (b-1) were fed at a feed rate of 4,950 g/hr and 50 g/hr, respectively, through the main feed port of a twin-screw extruder having a diameter of 25 mm (L/D=42) set to 200°C and melt-kneaded at a screw revolution rate of 200 rpm. (The side feed ports were closed.) The melt-kneaded mixture was subjected to vacuum deaeration through the vent port provided downstream of the extruder. The extruded resin was pelletized by a strand cutter. The resulting pellets were used for evaluation. The results are shown in Table 3.

### Example 26

The (a-1) as the polyoxymethylene resin for the component (A-2) in 80 part by weight and the masterbatch (ME1) prepared in Example 1 in 20 parts by weight were uniformly mixed. The resulting mixture was fed at a feed rate of 10 kg/hr through the main feed port of a twin-screw extruder having a diameter of 25 mm (L/D=42) set to 200°C and melt-kneaded at a screw revolution rate of 200 rpm. The side feed ports (1) and (2) were closed, and the melt-kneaded mixture was subjected to vacuum deaeration through the vent port provided downstream of the side feed port (2). The extruded resin was pelletized by a strand cutter. The resulting pellets were used for evaluation. The results are shown in Table 4.

### Examples 27 to 35

These Examples were performed in the same manner as in Example 26 except that the component (a-1) as the component (A-2) in Example 26 was changed to the components shown in Table 4. The results are shown in Table 4.

### Examples 36 to 48, and Comparative Example 9

These Examples and this Comparative were performed in the same manner as in Example 26 except that the masterbatch (ME1) component and the component (a-1) as the component (A-2) in Example 26 were changed to the components and the amounts shown in Table 5. The results are shown in Table 5.

### Examples 49 to 59

These Examples were performed in the same manner as in Example 26 except that the masterbatch (ME1) component and the component (a-1) as the component (A-2) in Example 26 were changed to the components and the amounts shown in Table 6. The results are shown in Table 6.

### Comparative Examples 10 to 14

These Comparative Examples were performed in the same manner as in Example 26 except that the masterbatch in Example 26 was changed to those shown in Table 7. The results are shown in Table 7.

### Comparative Example 15

The carbon masterbatch (MC7) in Comparative Example 8 was measured for physical properties as it is. The results are shown in Table 7.

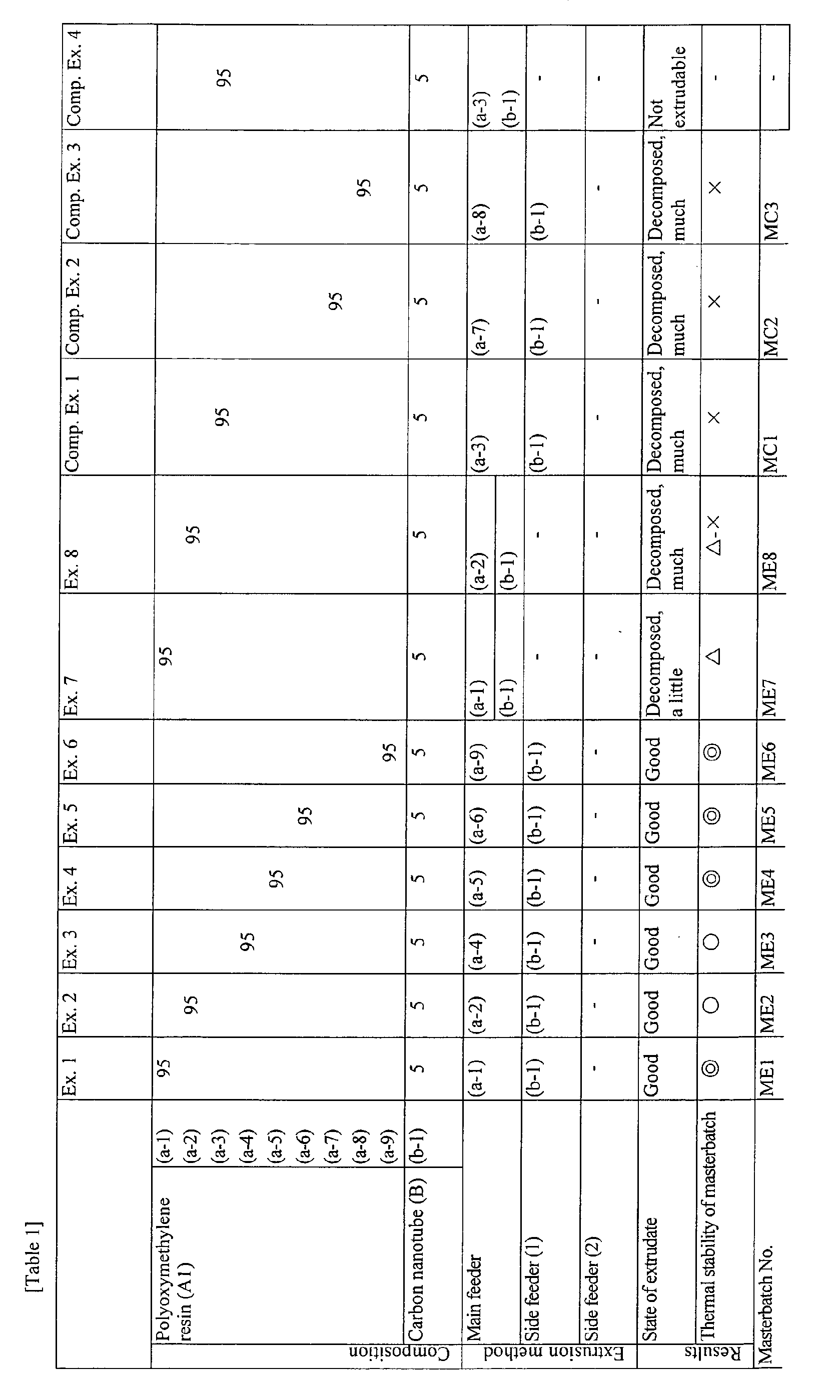

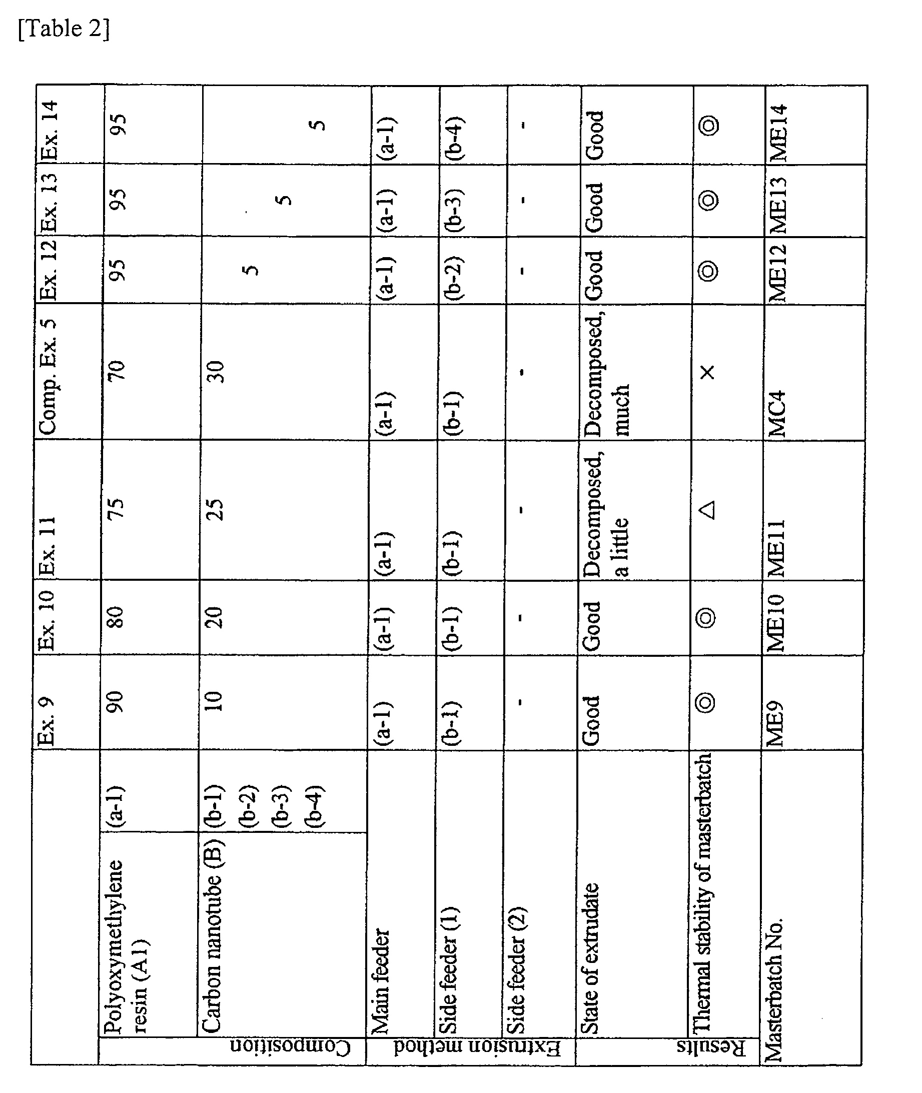

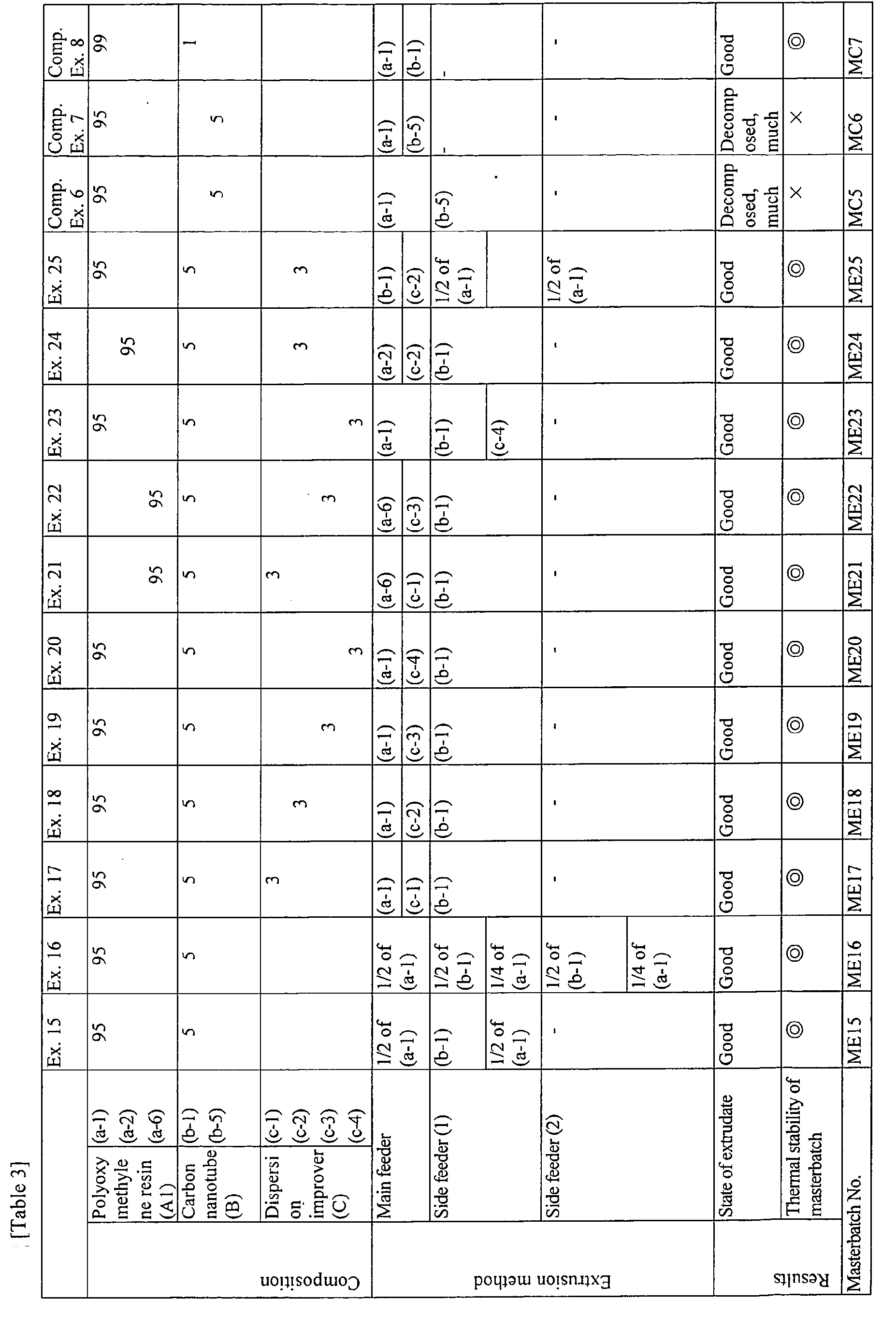

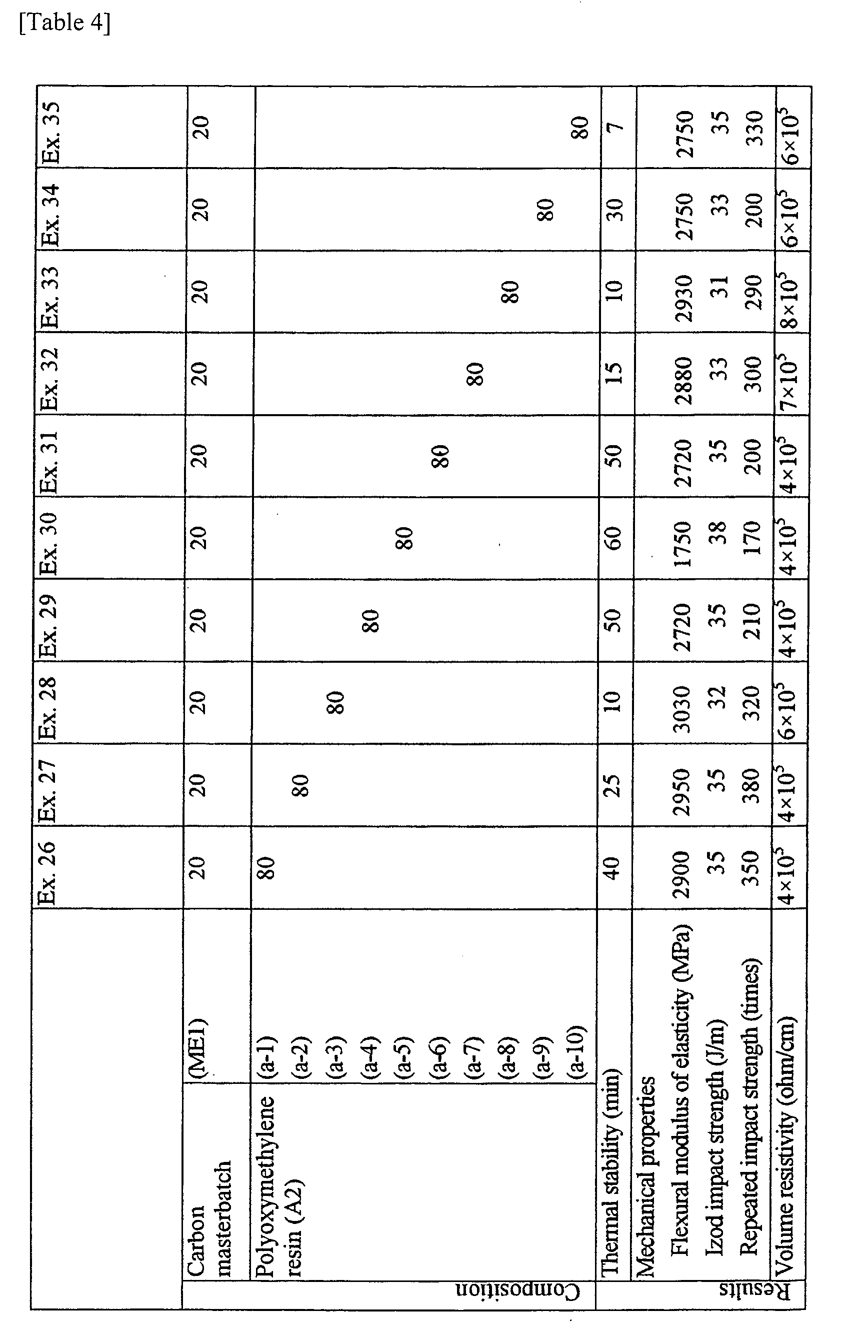

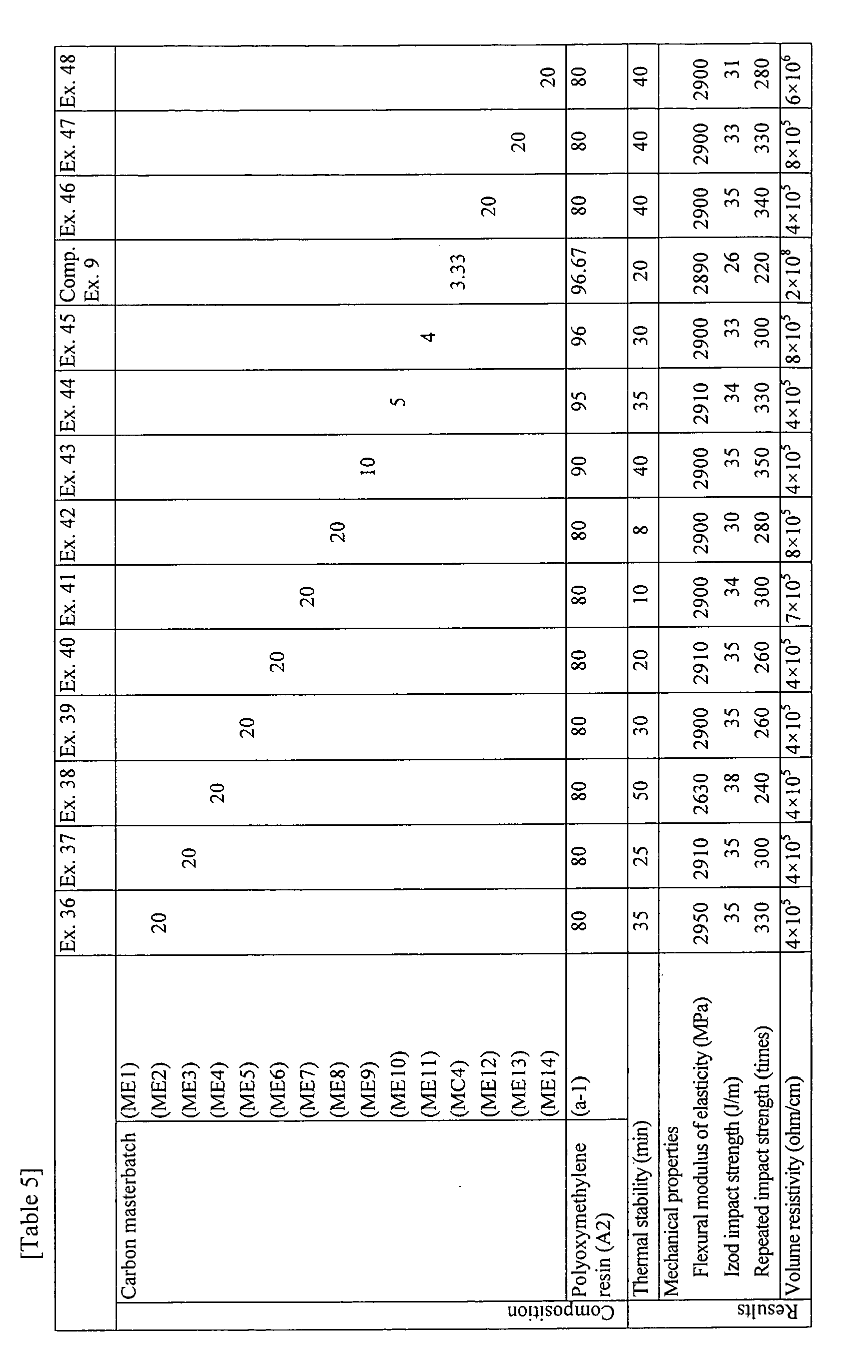

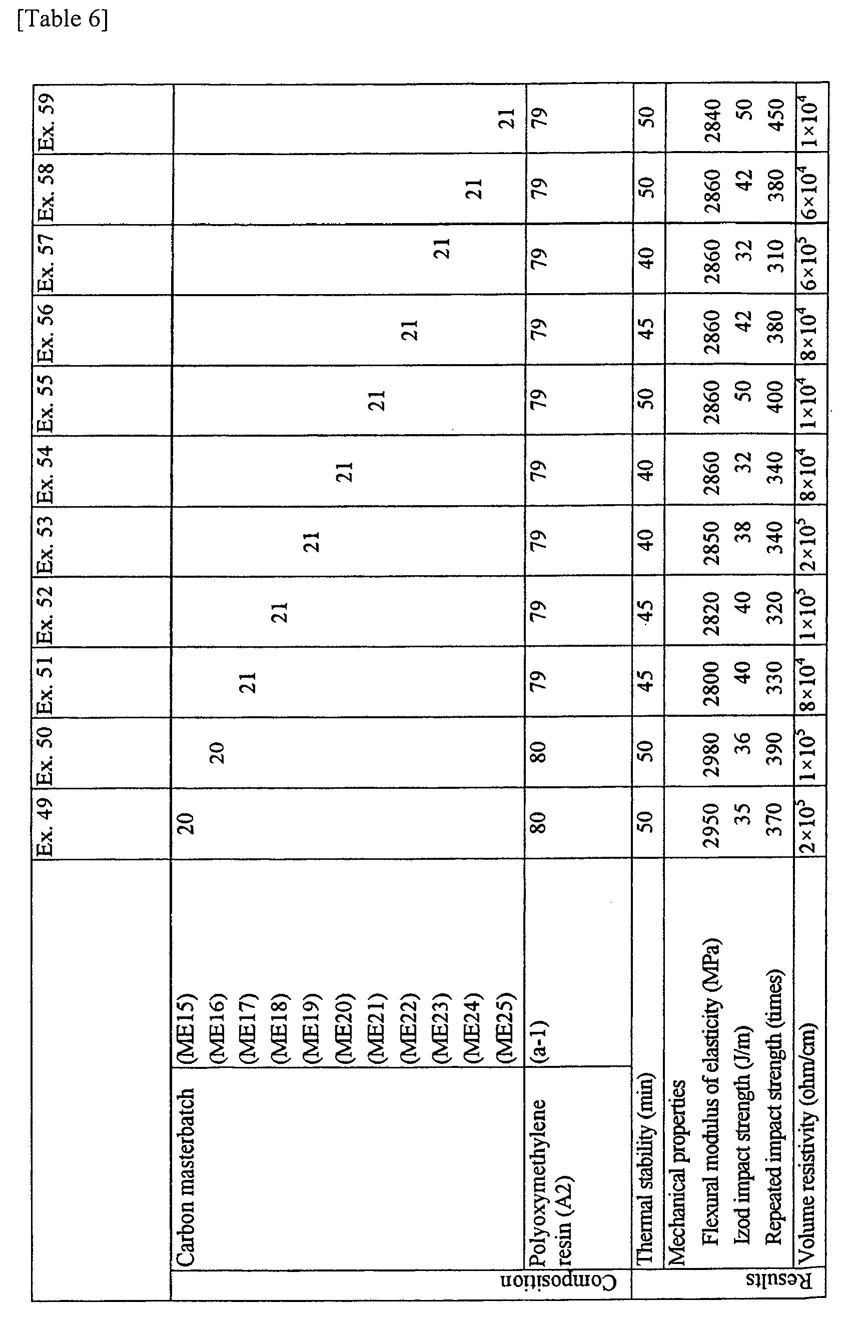

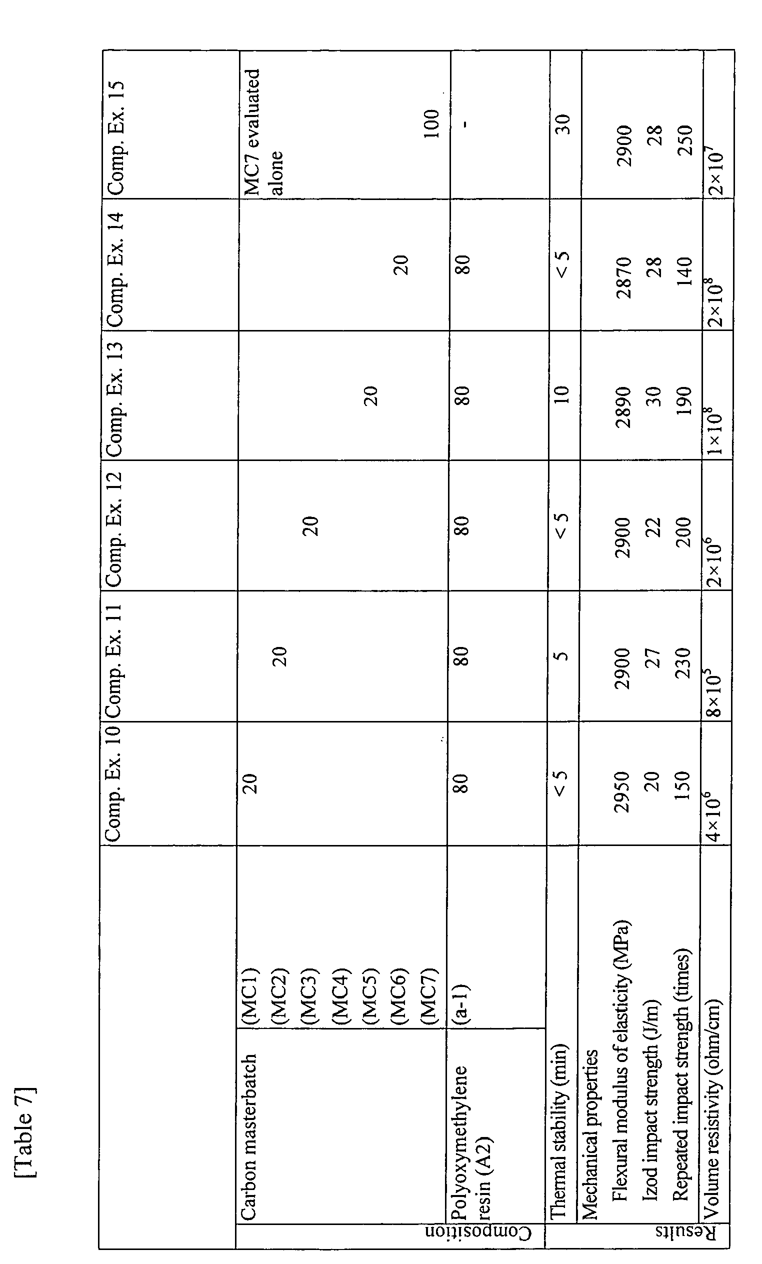

### Industrial Applicability

The present invention has made it possible to produce a masterbatch excellent in thermal stability by limiting the comonomer content and thermal stability of a polyoxymethylene copolymer and further devising a method of feeding the polyoxymethylene resin and carbon in the extrusion step. Moreover, the composition containing the masterbatch retains mechanical properties (elastic modulus, impact resistance, and vibration fatigue characteristic), chemical resistance, and moldability and also has conducting capability.

The composition using the masterbatch of the present invention provides a polyoxymethylene resin composition and a molded article thereof which not only retains excellent mechanical properties (elastic modulus, impact resistance, and vibration fatigue characteristics), chemical resistance, and moldability that are inherent in polyoxymethylene resins have, but also has excellent conducting capability. The composition of the present invention is suitable for OA appliances, VTR appliances, music, image and information appliances, communication appliances, automobile interior and exterior parts, and industrial miscellaneous goods.

## Claims

1. A masterbatch prepared by melt-kneading (A-1) a polyoxymethylene copolymer having a comonomer content of 0.3 to 15 mol% (based on the oxymethylene units) and a residence time for silver streaking of 20 min or more when molded at 230°C and (B) 2 to 35 parts by weight of a carbon nanotube having a fiber diameter of 1 nm to 100 nm and an average aspect ratio of 5 or more.

2. The masterbatch according to claim 1, wherein the (A-1) used for the masterbatch is a polyoxymethylene copolymer having a comonomer content of 0.4 to 15 mol% (based on the oxymethylene units) and a residence time for silver streaking of 25 min or more when molded after being resided in a molding machine set to a cylinder temperature of 230°C.

3. The masterbatch according to claim 2, wherein the (A-1) used for the masterbatch has a comonomer content of 0.4 to 5 mol% (based on the oxymethylene units).

4. The masterbatch according to any of claims 1 to 3, wherein a quaternary ammonium compound is used in a stabilization step for the (A-1) used for the masterbatch.

5. The masterbatch according to any of claims 1 to 4, wherein the masterbatch is prepared using a twin-screw extruder having one or more side feed ports by a process comprising feeding the component (A-1) through a main feed port; and then feeding the component (B) and an optional portion of the component (A-1) through the one or more side feed ports provided downstream of the main feed port.

6. The masterbatch according to any of claims 1 to 5, wherein a dispersion improver (C) is further added in an amount of 0.1 to 20% by weight based on the (A-1) and melt-kneaded.

7. The masterbatch according to claim 6, wherein addition of the dispersion improver (C) is conducted using a twin-screw extruder having one or more side feed ports and according to a procedure of (i) feeding the components (A-1) and (C) through the main feeder and then feeding the component (B) and an optional portion of the component (A-1) through the one or more side feeders; (ii) feeding the component (A-1) through the main feeder and then feeding the components (B), (C), and an optional portion of the component (A-1) through the one or more side feeders; or (iii) feeding the components (C), (B), and an optional portion of the component (A-1) through the main feeder and then feeding a remaining portion of the component (A-1) through the one or more side feeders.

8. A polyoxymethylene resin composition prepared by melt-kneading 100 weight parts of at least one selected from among a polyoxymethylene copolymer (A-2) having a comonomer content of 0.1 to 15 mol% (based on the oxymethylene units) and a terminal-stabilized polyoxymethylene homopolymer (A-3) with 0.5 to 100 parts by weight of the masterbatch according to any of claims 1 to 7.

9. The polyoxymethylene resin composition according to claim 8, which has a residence time for silver streaking of 7 min or more when molded after being resided in a molding machine set to a cylinder temperature of 230°C.

10. A molded article obtained by extrusion or injection molding of the polyoxymethylene resin composition according to claim 8 or 9.

11. A molded article obtained by further cutting the molded article according to claim 10.
